# EUROPEAN PATENT APPLICATION

(11) **EP 4 564 957 A1**
(43) Date of publication of application: **04.06.2025**
(21) Application number: 22952570.4
(22) Date of filing: 29.07.2022
(51) Int. Cl.: H04W 72/04

(54) **METHODS AND APPARATUS FOR DETERMINING NUMBER OF UPLINK TRANSMISSION LINKS, COMMUNICATION APPARATUS AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/109249
(87) International publication number: WO 2024/021124

(57) **Abstract**

The present disclosure relates to methods and apparatus for determining the number of uplink transmission links, a communication apparatus and a storage medium. A method for determining the number of uplink transmission links comprises: determining an uplink frequency band supporting uplink transmission switching; and determining a first number of uplink transmission links supported by the uplink frequency band. In the present disclosure, a terminal may determine the uplink frequency band supporting uplink transmission switching, and then determine the first number of the uplink transmission links supported by the uplink frequency band. Accordingly, when performing uplink transmission switching, the terminal can prepare for two uplink transmission links for an uplink frequency band supporting 2TX according to the condition of supporting 2TX, and just needs to prepare for two uplink transmission links for an uplink frequency band supporting 1TX according to the condition of supporting 1TX. Therefore, there is no need to prepare for two uplink transmission links for all uplink frequency bands according to the condition of supporting 2TX, thus helping to reduce the complexity of uplink transmission switching.

## Description

### TECHNICAL FIELD

The present disclosure relates to the technical field of communication, and in particular, to a method for determining the number of an uplink transmission link, a system for determining the number of uplink transmission link, an apparatus for determining the number of uplink transmission link, a communication apparatus and a computer-readable storage medium.

### BACKGROUND

In the related art, the terminal can indicate to perform uplink transmission switching (UL TX switching) on two bands. With the development of communication technology, there is a need for performing uplink transmission switching on more uplink bands. For example, the terminal needs to support uplink transmission switching among 3 or 4 uplink bands.

Compared with switching uplink transmission between fewer bands, the complexity of switching uplink transmission among more uplink bands will be higher. The complexity is mainly reflected in aspects such as hardware complexity, software complexity, and processing complexity in the switching procedure.

### SUMMARY

In view of this, embodiments of the present disclosure propose a method for determining the number of uplink transmission link, a system for determining the number of uplink transmission link, an apparatus for determining the number of uplink transmission link, a communication apparatus and a computer-readable storage medium to solve the technical problems in the related art.

According to the first aspect of the embodiments of the present disclosure, a method for determining the number of uplink transmission link is proposed, which is executed by a terminal. The method includes: determining an uplink band that supports uplink transmission switching; and determining a first number of an uplink transmission link supported by the uplink band.

According to the second aspect of the embodiments of the present disclosure, a method for determining the number of uplink transmission link is proposed, which is executed by a network device. The method includes: determining an uplink band supported by a terminal for uplink transmission switching; and determining a first number of an uplink transmission link supported by the uplink band.

According to the third aspect of the embodiments of the present disclosure, an apparatus for determining the number of uplink transmission link is proposed. The apparatus includes: a processing module, configured to determine an uplink band that supports uplink transmission switching; and determine a first number of an uplink transmission link supported by the uplink band.

According to the fourth aspect of the embodiments of the present disclosure, an apparatus for determining the number of uplink transmission link is proposed. The apparatus includes: a processing module, configured to determine an uplink band supported by a terminal for uplink transmission switching; and determine a first number of an uplink transmission link supported by the uplink band.

According to the fifth aspect of the embodiments of the present disclosure, a system for determining the number of uplink transmission link is proposed, including a terminal and a network device, where the terminal is configured to implement the above method for determining the number of uplink transmission link applicable to the terminal, and the network device is configured to implement the above method for determining the number of uplink transmission link applicable to the network device.

According to the sixth aspect of the embodiments of the present disclosure, a communication apparatus is proposed, including: a processor; and a memory for storing a computer program; where when the computer program is executed by the processor, the above-mentioned method for determining the number of uplink transmission link applicable to the terminal is implemented.

According to the seventh aspect of the embodiments of the present disclosure, a communication apparatus is proposed, including: a processor; and a memory for storing a computer program; where when the computer program is executed by the processor, the above-mentioned method for determining the number of uplink transmission link applicable to the network device is implemented.

According to the eighth aspect of the embodiments of the present disclosure, a computer-readable storage medium is proposed for storing a computer program, and when the computer program is executed by a processor, the above-mentioned method for determining the number of uplink transmission link applicable to the terminal is implemented.

According to the ninth aspect of the embodiments of the present disclosure, a computer-readable storage medium is proposed for storing a computer program, and when the computer program is executed by a processor, the above-mentioned method for determining the number of uplink transmission link applicable to the network device is implemented.

According to the embodiments of the present disclosure, the terminal can determine the uplink band that supports uplink transmission switching, and further determine the first number of uplink transmission link(s) supported by the uplink band. Accordingly, when the terminal performs uplink transmission switching, for the uplink band that supports 2TX, it can prepare for two uplink transmission links according to the situation of supporting 2TX, and for the uplink band that supports 1TX, it only needs to prepare for two uplink transmission links according to the situation of supporting 1TX. Therefore, it is unnecessary to prepare for two uplink transmission links according to the situation of supporting 2TX for all uplink bands, which is beneficial to reducing the complexity of uplink transmission switching.

### BRIEF DESCRIPTION OF THE DRAWINGS

In order to more clearly illustrate the technical solutions in the embodiments of the present disclosure, the drawings needed to be used in the description of the embodiments will be briefly introduced below. Obviously, the drawings in the following description are only some embodiments of the present disclosure. For those of ordinary skill in the art, other drawings can be obtained based on these drawings without exerting any creative effort.
FIG. 1 is a schematic flowchart of a method for determining the number of uplink transmission link according to an embodiment of the present disclosure.
FIG. 2 is a schematic flowchart of another method for determining the number of uplink transmission link according to an embodiment of the present disclosure.
FIG. 3 is a schematic flowchart of yet another method for determining the number of uplink transmission link according to an embodiment of the present disclosure.
FIG. 4 is a schematic flowchart of yet another method for determining the number of uplink transmission link according to an embodiment of the present disclosure.
FIG. 5 is a schematic flowchart of a method for determining the number of uplink transmission link according to an embodiment of the present disclosure.
FIG. 6 is a schematic block diagram of an apparatus for determining the number of uplink transmission link according to an embodiment of the present disclosure.
FIG. 7 is a schematic block diagram of an apparatus for determining the number of uplink transmission link according to an embodiment of the present disclosure.
FIG. 8 is a schematic block diagram of an apparatus for determining the number of uplink transmission link according to an embodiment of the present disclosure.
FIG. 9 is a schematic block diagram of an apparatus for determining the number of uplink transmission link according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. Based on the embodiments in the present disclosure, all other embodiments obtained by those of ordinary skill in the art without creative efforts fall within the scope of protection of the present disclosure.

The terms used in the embodiments of the present disclosure are for the purpose of describing specific embodiments only and are not intended to limit the embodiments of the present disclosure. As used in the embodiments of the present disclosure and the appended claims, the singular forms "a/an," and "the" are intended to include the plural forms as well, unless the context clearly dictates otherwise. It should also be understood that the term "and/or" as used herein refers to and includes any or all possible combinations of one or more of the associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, the word "if" as used herein may be interpreted as "when" or "upon" or "in response to determination."

For the purpose of simplicity and ease of understanding, the terms used in the present disclosure are "greater than" or "less than", "higher than" or "lower than" when characterizing size relationships. However, for those skilled in the art, it can be understood that the term "greater than" also covers the meaning of "greater than or equal to", and "less than" also covers the meaning of "less than or equal to"; the term "higher than" covers the meaning of "higher than or equal to", and "less than" also covers the meaning of "less than or equal to".

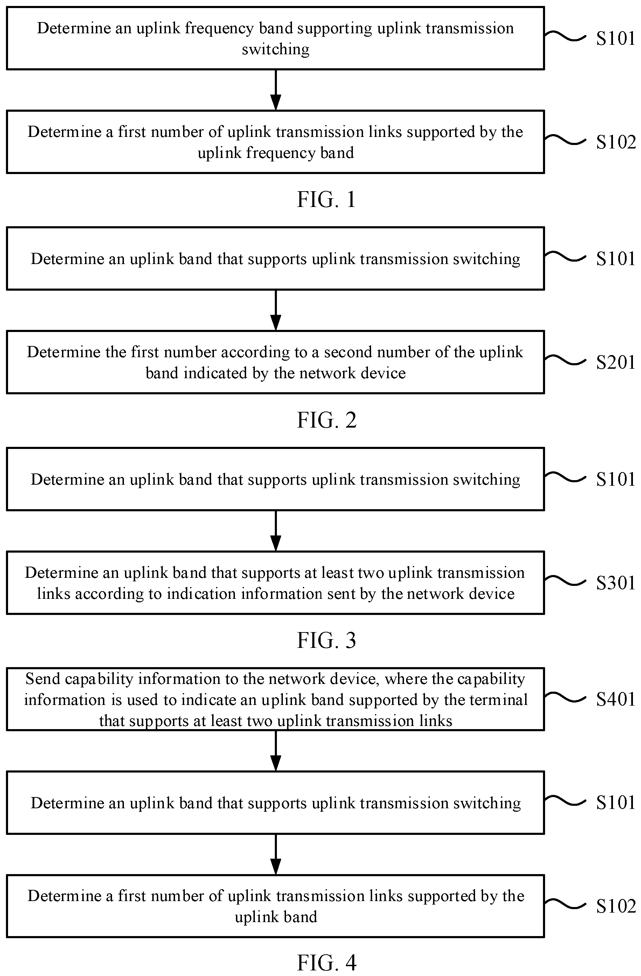

FIG. 1 is a schematic flowchart of a method for determining the number of uplink transmission link according to an embodiment of the present disclosure. The method for determining the number of uplink transmission link shown in this embodiment may be executed by a terminal, which includes but is not limited to the communication apparatus such as a mobile phone, a tablet computer, a wearable device, a sensor, and an Internet of Things device. The terminal may communicate with a network device, which includes but is not limited to the network devices in 4G, 5G, 6G and other communication systems, such as a base station, a core network, etc.

As shown in FIG. 1, the method for determining the number of uplink transmission link may include the following steps.

In step S101, an uplink band that supports uplink transmission switching is determined.

In step S102, a first number of uplink transmission link supported by the uplink band is determined.

In one embodiment, the scenarios in which the terminal performs uplink transmission switching include but are not limited to dual connectivity (such as EN-DC), carrier aggregation (such as inter-band carrier aggregation (Inter-band CA)), supplementary uplink (SUL), etc.

For example, the terminal performing uplink transmission switching from a first uplink band to a second uplink band is taken as an example.

In the dual connectivity scenario, the terminal performs uplink transmission switching, and may switch from a primary cell group carrier to a secondary cell group carrier. The primary cell group carrier belongs to the first uplink band, and the secondary cell group carrier belongs to the second uplink band.

In the carrier aggregation scenario, for example, the carrier in band#1 and the carrier in band#2 are aggregated, the terminal performs uplink transmission switching, and may switch from the carrier in band#1 to the carrier in band#2. The first uplink band may be band#1, and the second uplink band may be band#2.

In the supplementary uplink scenario, the terminal performs uplink transmission switching and may switch from the ordinary uplink carrier to the supplementary uplink carrier. The ordinary uplink carrier belongs to the first uplink band, and the supplementary uplink carrier belongs to the second uplink band.

In one embodiment, the strategy for the terminal to perform uplink transmission switching includes but is not limited to the following two:

the terminal not supporting uplink transmission in two uplink bands at the same time, that is, SwitchedUL;

the terminal supporting uplink transmission in two uplink bands at the same time, that is, DualUL.

As for which strategy the terminal uses, it may be indicated by the network device. For example, the network may indicate through Radio Resource Control (RRC) signaling.

In one embodiment, the terminal may support dual transmission links (2TX) or single transmission link (1TX) on the uplink band before switching and the uplink band after switching. In the case of supporting 2TX, it needs to prepare for two uplink transmission links, and compared to the case in which 1TX is supported and only one uplink transmission link needs to be prepared for, the preparation complexity is relatively high.

At present, when the terminal performs uplink transmission switching, for the above three application scenarios, it only considers switching between two uplink bands. In this case, even if the terminal is not sure about the number of uplink transmission link supported by the uplink band, for each band, it prepares for two uplink transmission links according to the situation of supporting 2TX, which can satisfy the switching of uplink transmission to any band and ensure support for 2TX, and the complexity it not too high.

However, when the terminal is required to support uplink transmission switching among more than two (such as 3, 4, etc.) bands, in the case that the terminal performs uplink transmission switching, it is necessary to prepare for two uplink transmission links according to the situation of supporting 2TX for a large number of bands, and then the complexity will be relatively high. Therefore, it is necessary to consider how to reduce the complexity of uplink transmission switching.

According to the embodiments of the present disclosure, the terminal may determine an uplink band that supports uplink transmission switching, and further determine a first number of the uplink transmission link(s) supported by the uplink band. For example, the first number may be 2, then the uplink band supports 2TX. For example, the number may be 1, then the uplink band indicates 1TX.

Accordingly, when the terminal performs uplink transmission switching, for the uplink band that supports 2TX, it can prepare for two uplink transmission links according to the situation of supporting 2TX, and for the uplink band that supports 1TX, it only needs to prepare for two uplink transmission links according to the situation of supporting 1TX. Therefore, it is unnecessary to prepare for two uplink transmission links according to the situation of supporting 2TX for all uplink bands, which is beneficial to reducing the complexity of uplink transmission switching.

It should be noted that the terminal can support the uplink transmission switching mechanism in Rel-17 when performing uplink transmission switching. In addition, the first number of the uplink transmission link indicated by the uplink band is not limited to 1 or 2, and may also be other numbers greater than 2.

FIG. 2 is a schematic flowchart of another method for determining the number of uplink transmission link according to an embodiment of the present disclosure. As shown in FIG. 2, determining the number of uplink transmission link indicated by the uplink band includes the following steps.

In step S201, the first number is determined according to a second number of the uplink band indicated by the network device.

In one embodiment, the terminal may pre-store an association relationship between the second number and the first number, and then after receiving the second number of the uplink band indicated by the network device, the terminal may determine the first number corresponding to the indicated second number according to the association relationship. It should be noted that determining the first number means that among all uplink bands that support uplink transmission switching, each uplink band supports the uplink transmission link(s) of the first number.

In one embodiment, determining the first number according to the second number of the uplink band indicated by a network device includes:

when the second number is within a first range, determining that the first number is 1;

when the second number is within a second range, determining that the first number is greater than 1.

In one embodiment, the association relationship between the second number and the first number may be that when the second number is within the first range, the corresponding first number is 1, and when the second number is within the second range, the corresponding first number is greater than 1 (e.g., may be 2 or a value greater than 2).

For example, when the second number indicated by the network device is greater than 2 (for example, 3, 4, etc.), the terminal may determine that the first number is 1, that is, each uplink band only supports one uplink transmission link (1TX). For example, when the second number indicated by the network device is equal to 2, the terminal may determine that the first number is 2, that is, each uplink band may support 2 uplink transmission links (2TX).

In one embodiment, determining the number of uplink transmission link indicated by the uplink band includes: determining the first number according to a protocol agreement.

In one embodiment, the protocol agreement is that in the uplink band list configured by the network device and/or the list of bands supported by the terminal, the first number of the uplink transmission link supported by a preset sorted uplink band(s) is greater than 1, and the first number of uplink transmission link supported by other uplink band(s) is 1.

In addition to determining the first number according to the second number indicated by the network device, the first number may also be determined according to a protocol agreement. The specific manner for determining the first number is not limited in the present disclosure and may be selected as needed.

For example, the protocol agreement is that in the list of bands supported by the terminal, the first number of the uplink transmission link supported by the first N (N is an integer greater than 0) uplink bands is greater than 1, for example, 2, and the first number of the uplink transmission link supported by other uplink band(s) is 1. The terminal may determine the order of each uplink band in the list of supported bands, for example, band#1, band#2, band#3, band#4, and N=2, then it can determine that the number of the uplink transmission link supported by the first two uplink bands, that is, band #1, band#2, is 2 (that is, 2TX is supported), and the number of the uplink transmission link supported by the other uplink bands in the list, that is, band#3, band#4, is 1 (that is, 1TX is supported).

FIG. 3 is a schematic flowchart of yet another method for determining the number of uplink transmission link according to an embodiment of the present disclosure. As shown in FIG. 3, determining the first number of the uplink transmission link supported by the uplink band includes the following steps.

In step S301, an uplink band(s) that supports at least two uplink transmission links is determined according to indication information sent by the network device.

In one embodiment, the network device may indicate only the uplink band(s) that supports at least two (for example, 2) uplink transmission links through indication information, and the terminal may determine the uplink band(s) that supports at least two uplink transmission links according to the indication information, and by default, the other uplink band(s) only supports one uplink transmission link. The other uplink band(s) and the uplink band(s) indicated by the network device belong to the uplink bands (for example, they may be 3 or 4 bands) that support uplink transmission switching.

For example, the uplink bands that support uplink transmission switching includes 4 uplink bands, namely band#1, band#2, band#3, and band#4. According to the indication information, it is determined that band#1 and band#2 support 2 uplink transmission links (i.e. 2TX), and band#3 and band#4 support one uplink transmission link (i.e. 1TX) by default.

It should be noted that the indication information may be determined according to the capability information reported by the network device in subsequent embodiments.

FIG. 4 is a schematic flowchart of yet another method for determining the number of uplink transmission link according to an embodiment of the present disclosure. As shown in FIG. 4, the method further includes the following steps.

In step S401, capability information is sent to the network device, where the capability information is used to indicate an uplink band supported by the terminal that supports at least two uplink transmission links.

In one embodiment, the terminal may send capability information to the network device, and inform the network device, through the capability information, the uplink band(s) supported by the terminal and supporting at least two (for example, 2) uplink transmission links. According to the capability information, the network device may determine the uplink band(s) supported by the terminal and supporting at least two uplink transmission links, and the other uplink band(s) only supports one uplink transmission link by default. The other uplink band(s) and the uplink band(s) indicated by the capability information belong to the uplink bands (for example, they may be 3 or 4 bands) that support uplink transmission switching.

For example, the uplink bands that support uplink transmission switching include four uplink bands, namely band#1, band#2, band#3, and band#4. The capability information may indicate that the uplink bands supported by the terminal and indicating two uplink transmission links are band#1 and band#2, then the network device may acquiesce in that band#3 and band#4 supports one uplink transmission link (that is, 1TX).

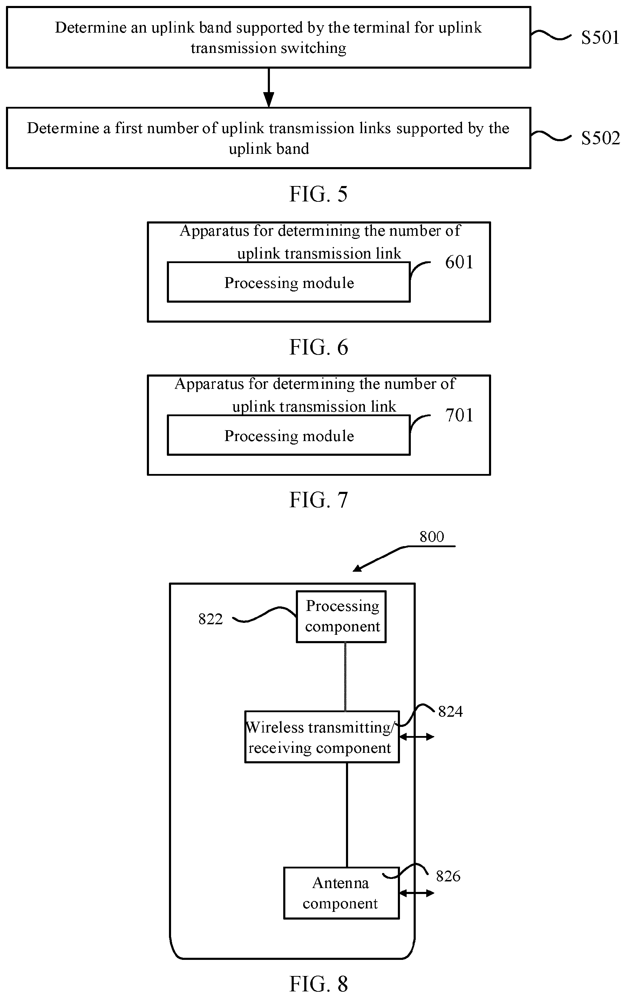

FIG. 5 is a schematic flowchart of a method for determining the number of uplink transmission link according to an embodiment of the present disclosure. The method for determining the number of uplink transmission link shown in this embodiment may be executed by a network device. The network device may communicate with a terminal. The network device includes but is not limited to base stations in communication systems such as 4G base stations, 5G base stations, and 6G base stations. The terminal includes but is not limited to mobile phones, tablet computers, wearable devices, sensors, Internet of Things devices and other communication apparatuses.

As shown in FIG. 5, the method for determining the number of uplink transmission link may include the following steps.

In step S501, an uplink band supported by the terminal for uplink transmission switching is determined.

In step S502, a first number of uplink transmission link supported by the uplink band is determined.

In one embodiment, the scenarios in which the terminal performs uplink transmission switching include but are not limited to dual connectivity (such as EN-DC), carrier aggregation (such as inter-band carrier aggregation (Inter-band CA)), supplementary uplink (SUL) and other scenarios.

For example, the terminal performing uplink transmission switching from the first uplink band to the second uplink band is taken as an example.

In the dual connectivity scenario, the terminal performs uplink transmission switching and may switch from the primary cell group carrier to the secondary cell group carrier. The primary cell group carrier belongs to the first uplink band, and the secondary cell group carrier belongs to the second uplink band.

In the carrier aggregation scenario, for example, the carrier in band#1 and the carrier in band#2 are aggregated, the terminal performs uplink transmission switching, and may switch from the carrier in band#1 to the carrier in band#2. The first uplink band may be band#1, and the second uplink band may be band#2.

In the supplementary uplink scenario, the terminal performs uplink transmission switching and may switch from the ordinary uplink carrier to the supplementary uplink carrier. The ordinary uplink carrier belongs to the first uplink band and the supplementary uplink carrier belongs to the second uplink band.

In one embodiment, the strategy for the terminal to perform uplink transmission switching includes but is not limited to the following two:
the terminal not supporting uplink transmission in two uplink bands at the same time, that is, SwitchedUL;
the terminal supporting uplink transmission in two uplink bands at the same time, that is, DualUL.

As for which strategy the terminal uses, it can be indicated by the network device. For example, the network can indicate through radio resource control (RRC) signaling.

In one embodiment, the terminal can support dual transmission links (2TX) or single transmission link (1TX) on the uplink band before switching and the uplink band after switching. In the situation of supporting 2TX, it needs to prepare for two uplink transmission links, compared to the case where it only needs to prepare for one uplink transmission link in the situation of supporting 1TX, the preparation complexity is relatively high.

At present, when the terminal performs uplink transmission switching, for the above three application scenarios, only switching between two uplink bands is considered. In this case, even if the network device is not sure about the number of uplink transmission link supported by the uplink band, for each band, it prepares for two uplink transmission links according to the situation of supporting 2TX, which can satisfy the terminal's uplink transmission switching to any band, and the network device can guarantee support for 2TX, and the complexity will not be too much high.

However, when the terminal is required to support uplink transmission switching among more than two (such as 3, 4, etc.) bands, in the case that the terminal performs uplink transmission switching, the network device needs to prepare for two uplink transmission links according to the situation of supporting 2TX for a large number of bands. Then the complexity will be relatively high. Therefore, it is necessary to consider how to reduce the complexity of uplink transmission switching.

According to the embodiments of the present disclosure, the network device may determine an uplink band that supports uplink transmission switching, and further determine a first number of uplink transmission link supported by the uplink band. For example, the first number may be 2, then the uplink band supports 2TX. For example, the number may be 1, then the uplink band indicates 1TX.

Accordingly, when the terminal performs uplink transmission switching, for the uplink band that supports 2TX, the network device may prepare for two uplink transmission links according to the situation of supporting 2TX, and for the uplink band that supports 1TX, it only needs to prepare for two uplink transmission links according to the situation of supporting 1TX. Therefore, it is unnecessary to prepare for two uplink transmission links according to the situation of supporting 2TX for all uplink bands, which is beneficial to reducing the complexity of uplink transmission switching.

It should be noted that the terminal can support the uplink transmission switching mechanism in Rel-17 when performing uplink transmission switching. In addition, the first number of uplink transmission link indicated by the uplink band is not limited to 1 or 2, and may also be other numbers greater than 2.

In one embodiment, determining the number of uplink transmission link indicated by the uplink band includes:
determining the first number according to a second number of the uplink band configured for the terminal.

In one embodiment, the network device and the terminal may pre-store an association relationship between the second number and the first number, and then after configuring the uplink band(s) of the second number for the terminal, the first number corresponding to the second number may be determined according to the association relationship. It should be noted that determining the first number means that among all uplink bands that support uplink transmission switching, each uplink band supports the uplink transmission link(s) of the first number.

In one embodiment, determining the first number according to the second number of the uplink band configured for the terminal includes:
when the second number is within a first range, determining that the first number is 1;
when the second number is within a second range, determining that the first number is greater than 1.

In one embodiment, the association relationship between the second number and the first number may be that when the second number is within the first range, the corresponding first number is 1, and when the second number is within the second range, the corresponding first number is greater than 1 (e.g., may be 2 or a value greater than 2).

For example, when the second number indicated to the terminal is greater than 2 (for example, 3, 4, etc.), the network device may determine that the first number is 1, that is, each uplink band only supports one uplink transmission link (1TX). For example, when the second number indicated to the terminal is equal to 2, the network device may determine that the first number is 2, that is, each uplink band may support two uplink transmission links (2TX).

In one embodiment, determining the number of uplink transmission link indicated by the uplink band includes:
determining the first number according to a protocol agreement.

In one embodiment, the protocol agreement is that in the list of uplink bands configured for the terminal and/or the list of bands supported by the terminal, the first number of uplink transmission link supported by the preset sorted uplink band(s) is greater than 1, and the first number of uplink transmission link supported by the other uplink band(s) is 1.

In addition to determining the first number according to the second number indicated to the terminal, the network device may also determine the first number according to the protocol agreement. The specific manner of determining the first number is not limited in the present disclosure and may be selected as needed.

For example, the protocol agreement is that in the list of bands supported by the terminal, the first number of uplink transmission link supported by the first N (N is an integer greater than 0) uplink band(s) is greater than 1, for example, 2, and the first number of uplink transmission link supported by the other uplink band(s) is 1. The network device may determine the order of each uplink band in the list of bands supported by the terminal, for example, band#1, band#2, band#3, band#4, and N=2, then it can be determined that the number of uplink transmission link supported by the first two uplink bands, that is, band#1, band#2, is 2 (that is, 2TX is supported), and the number of uplink transmission link supported by the other uplink bands in the list, namely, band#3, band#4, is 1 (that is, 1TX is supported).

In one embodiment, the method further includes: sending indication information to the terminal, where the indication information is used to indicate an uplink band that supports at least two uplink transmission links.

In one embodiment, the network device may only indicate the uplink band(s) that supports at least two (for example, 2) uplink transmission links through indication information, and the terminal may determine the uplink band(s) that supports at least two uplink transmission links according to the indication information, and by default, the other uplink band(s) only supports one uplink transmission link. The other uplink band(s) and the uplink band(s) indicated by the network device belong to the uplink bands that support uplink transmission switching (for example, they may be 3 or 4 bands).

For example, the uplink bands that supports uplink transmission switching includes 4 uplink bands, namely band#1, band#2, band#3, and band#4. According to the indication information, it is determined that band#1 and band#2 support 2 uplink transmission links (i.e. 2TX), and band#3 and band#4 can support one uplink transmission link (i.e. 1TX) by default.

It should be noted that the indication information may be determined according to the capability information reported by the network device in subsequent embodiments.

In one embodiment, the method further includes: receiving capability information sent by the terminal; and determining, according to the capability information, an uplink band supported by the terminal that supports at least two uplink transmission links.

In one embodiment, the terminal may send capability information to the network device. According to the capability information, the network device may determine the uplink band(s) supported by the terminal that supports at least two uplink transmission links, and the other uplink band(s) only supports one uplink transmission link by default. The other uplink band(s) and the uplink band(s) indicated by the capability information belong to the uplink bands that support uplink transmission switching (for example, they may be 3 or 4 bands).

For example, the uplink bands that support uplink transmission switching include four uplink bands, namely band#1, band#2, band#3, and band#4. The capability information may indicate that the uplink bands supported by the terminal and indicating two uplink transmission links are band#1 and band#2, then the network device acquiesce in that band#3 and band#4 support one uplink transmission link (that is, 1TX).

Embodiments of the present disclosure also propose a system for determining the number of uplink transmission link, including a terminal and a network device. The terminal is configured to implement the method for determining the number of uplink transmission link applicable to the terminal as described in any of the above embodiments, and the network device is configured to implement the method for determining the number of uplink transmission link applicable to the network device described in any of the above embodiments.

In one embodiment, the terminal may determine an uplink band that supports uplink transmission switching, and determine a first number of uplink transmission link supported by the uplink band. The network device may determine the uplink band supported by the terminal for uplink transmission switching, and then determine the first number of uplink transmission link supported by the uplink band.

Accordingly, when the terminal performs uplink transmission switching, both the terminal and the network device only prepare for two uplink transmission links for the uplink band that supports 2TX according to the situation of supporting 2TX, while only prepare for two uplink transmission links according to the situation of supporting 1TX for the uplink band that supports 1TX. Therefore, it is unnecessary to prepare for two uplink transmission links according to the situation of supporting 2TX for all uplink bands, which is beneficial to reducing the complexity of uplink transmission switching.

Corresponding to the foregoing embodiments of the method for determining the number of uplink transmission link, the present disclosure also provides an embodiment of an apparatus for determining the number of uplink transmission link.

FIG. 6 is a schematic block diagram of an apparatus for determining the number of uplink transmission link according to an embodiment of the present disclosure. The apparatus for determining the number of uplink transmission link shown in this embodiment may be a terminal, or an apparatus composed of modules in the terminal. The terminal includes but is not limited to mobile phones, tablet computers, wearable devices, sensors, Internet of Things devices and other communication apparatuses. The terminal may communicate with the network device, which includes but is not limited to the network device in 4G, 5G, 6G and other communication systems, such as base stations, core networks, etc.

As shown in FIG. 6, the apparatus for determining the number of uplink transmission link includes:
a processing module 601, configured to determine an uplink band that supports uplink transmission switching; and determine a first number of uplink transmission link supported by the uplink band.

In one embodiment, the processing module is configured to determine the first number according to a second number of the uplink band indicated by the network device.

In one embodiment, determining the first number according to the second number of the uplink band indicated by the network device includes: when the second number is within a first range, determining that the first number is 1; when the second number is within a second range, determining that the first number is greater than 1.

In one embodiment, the processing module is configured to determine the first number according to a protocol agreement.

In one embodiment, the protocol agreement is that in the uplink band list configured by the network device and/or the list of bands supported by the terminal, the first number of uplink transmission link supported by the preset sorted uplink band(s) is greater than 1, and the first number of uplink transmission link supported by the other uplink band(s) is 1.

In one embodiment, the processing module is configured to determine an uplink band that supports at least two uplink transmission links according to indication information sent by the network device.

In one embodiment, the apparatus further includes: a sending module configured to send capability information to the network device, where the capability information is used to indicate an uplink band supported by the terminal that supports at least two uplink transmission links.

FIG. 7 is a schematic block diagram of an apparatus for determining the number of uplink transmission link according to an embodiment of the present disclosure. The apparatus for determining the number of uplink transmission link shown in this embodiment may be a network device, or a device composed of modules in the network device, and the network may communicate with the terminal. The terminal includes but is not limited to mobile phones, tablet computers, wearable devices, sensors, Internet of Things devices and other communication apparatuses. The network device includes but is not limited to the network devices in 4G, 5G, 6G and other communication systems, such as base stations, core networks, etc.

As shown in FIG. 7, the apparatus for determining the number of uplink transmission link includes:
a processing module 701, configured to determine an uplink band supported by the terminal for uplink transmission switching; and determine a first number of uplink transmission link supported by the uplink band.

In one embodiment, the processing module is configured to determine the first number according to a second number of the uplink band configured for the terminal.

In one embodiment, the processing module is configured to determine that the first number is 1 when the second number is within a first range; and determine that the first number is greater than 1 when the second number is within a second range.

In one embodiment, the processing module is configured to determine the first number according to a protocol agreement.

In one embodiment, the protocol agreement is that in the list of uplink bands configured for the terminal and/or the list of bands supported by the terminal, the first number of uplink transmission link supported by the preset sorted uplink band(s) is greater than 1, and the first number of uplink transmission link supported by the other uplink band(s) is 1.

In one embodiment, the apparatus further includes: a sending module configured to send indication information to the terminal, where the indication information is used to indicate an uplink band that supports at least two uplink transmission links.

In one embodiment, the apparatus further includes: a receiving module configured to receive capability information sent by the terminal; where the processing module is further configured to determine the uplink band supported by the terminal that supports at least two uplink transmission links according to the capability information.

Regarding the apparatuses in the above embodiments, the specific manner in which each module performs operations has been described in detail in the embodiments of the relevant methods, and will not be described in detail here.

As for the apparatus embodiments, since they basically correspond to the method embodiments, the partial description of the method embodiments is referred to for relevant details. The apparatus embodiments described above are only illustrative. The modules described as separate components may or may not be physically separated. The components shown as modules may or may not be physical modules, that is, they may be located in one place, or may be distributed to multiple network modules. Some or all of the modules may be selected according to actual needs to achieve the purpose of the solutions of the embodiments. Persons of ordinary skill in the art can understand and implement them without any creative effort.

An embodiment of the present disclosure also provides a communication apparatus, including: a processor; and a memory for storing a computer program; where when the computer program is executed by the processor, the method for determining the number of uplink transmission link applicable to the terminal described in any of the above embodiments is implemented.

An embodiment of the present disclosure also provides a communication apparatus, including: a processor; and a memory for storing a computer program; where when the computer program is executed by the processor, the method for determining the number of uplink transmission link applicable to the network device described in any of the above embodiments is implemented.

An embodiment of the present disclosure also provides a computer-readable storage medium for storing a computer program. When the computer program is executed by a processor, the method for determining the number of uplink transmission link applicable to the terminal as described in any of the above embodiments is implemented.

An embodiment of the present disclosure also provides a computer-readable storage medium for storing a computer program. When the computer program is executed by a processor, the method for determining the number of uplink transmission link applicable to the network device as described in any of the above embodiments is implemented.

As shown in FIG. 8, FIG. 8 is a schematic block diagram of an apparatus 800 for determining a number of uplink transmission link according to an embodiment of the present disclosure. The apparatus 800 may be provided as a base station. Referring to FIG. 8, the apparatus 800 includes a processing component 822, a wireless transmitting/receiving component 824, an antenna component 826, and a signal processing portion specific to the wireless interface. The processing component 822 may further include one or more processors. One of the processors in the processing component 822 may be configured to implement the method for determining the number of uplink transmission link applicable to the network device described in any of the above embodiments.

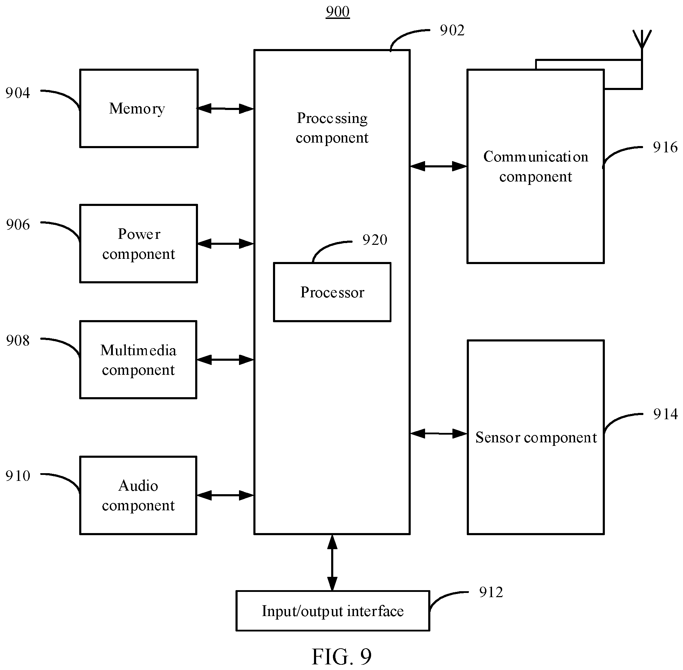

FIG. 9 is a schematic block diagram of an apparatus 900 for determining a number of uplink transmission link according to an embodiment of the present disclosure. For example, the apparatus 900 may be a mobile phone, a computer, a digital broadcast terminal, a messaging device, a game console, a tablet, a medical device, exercise equipment, a personal digital assistant, and the like.

Referring to FIG. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the apparatus 900, such as the operations associated with display, telephone calls, data communications, camera operations, and recording operations. The processing component 902 may include one or more processors 920 to execute instructions to complete all or part of the steps of the above method for determining a number of uplink transmission link applicable to the terminal. Moreover, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operations of the apparatus 900. Examples of such data include instructions for any application or method operated on the apparatus 900, contact data, phonebook data, messages, pictures, videos, etc. The memory 904 may be implemented using any type of volatile or non-volatile storage devices, or a combination thereof, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power component 906 provides power to the various components of the apparatus 900. The power component 906 may include a power management system, one or more power sources, and other components associated with the generation, management, and distribution of power in the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or slide action, but also detect a period of time and a pressure associated with the touch or slide action. In some embodiments, the multimedia component 908 includes a front camera and/or a rear camera. The front camera and/or the rear camera may receive an external multimedia data while the apparatus 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signals may be further stored in the memory 904 or transmitted via the communication component 916. In some embodiments, the audio component 910 also includes a speaker for outputting audio signals.

The I/O interface 912 provides an interface between the processing component 902 and peripheral interface modules, such as a keyboard, a click wheel, buttons, etc. The buttons may include, but are not limited to, a home button, a volume button, a starting button, and a locking button.

The sensor component 914 includes one or more sensors for providing status assessment of various aspects of the apparatus 900. For example, the sensor component 914 may detect an open/closed state of the apparatus 900, relative positioning of components, such as the display and keypad of the apparatus 900, a change in position of the apparatus 900 or a component of the apparatus 900, a presence or absence of user contact with the apparatus 900, an orientation or acceleration/deceleration of the apparatus 900, and a change in temperature of the apparatus 900. The sensor assembly 914 may include a proximity sensor configured to detect the presence of nearby objects without any physical contact. The sensor assembly 914 may also include a light sensor, such as a CMOS or CCD image sensor, for use in imaging applications. In some embodiments, the sensor component 914 may also include an acceleration sensor, a gyroscope sensor, a magnetic sensor, a pressure sensor, or a temperature sensor.

The communication component 916 is configured to facilitate communication, wired or wirelessly, between the apparatus 900 and other devices. The apparatus 900 can access a wireless network based on a communication standard, such as WiFi, 2G, 3G, 4G LTE, 5G NR, or a combination thereof. In one exemplary embodiment, the communication component 916 receives a broadcast signal or broadcast related information from an external broadcast management system via a broadcast channel. In one exemplary embodiment, the communication component 916 further includes a near field communications (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above method for determining the number of uplink transmission link applicable to the terminal.

In exemplary embodiments, there is also provided a non-transitory computer-readable storage medium including instructions, such as a memory 904 including instructions. The instructions may be executed by the processor 920 of the apparatus 900 to complete the above-mentioned method for determining the number of uplink transmission link applicable to the terminal. For example, the non-transitory computer-readable storage medium may be a ROM, a random access memory (RAM), a CD-ROM, a magnetic tape, a floppy disk, an optical data storage device, etc.

Other embodiments of the present disclosure will be readily apparent to those skilled in the art from consideration of the specification and practice of the disclosure herein. The present disclosure is intended to cover any variations, uses, or adaptations of the disclosure that follow the general principles of the present disclosure and include common knowledge or habitual technical means in the technical field that are not disclosed in the present disclosure. It is intended that the specification and embodiments are considered as exemplary only, with a true scope and spirit of the disclosure being indicated by the following claims.

It is to be understood that the present disclosure is not limited to the precise structures described above and illustrated in the accompanying drawings, and various modifications and changes may be made without departing from the scope thereof. The scope of the present disclosure is limited only by the appended claims.

It should be noted that in the present disclosure, the relational terms such as first and second are only used to distinguish one entity or operation from another entity or operation, and do not necessarily require or imply that any such actual relationship or sequence exists between these entities or operations. The terms "comprise/include" "contain" or any other variation thereof are intended to cover a non-exclusive inclusion such that a process, method, article or device including a list of elements includes not only those elements but also others not expressly listed elements, or elements inherent to such process, method, article or device. Without further limitation, an element defined by the statement "comprise/include a..." does not exclude the presence of additional identical elements in a process, method, article, or apparatus that includes the stated element.

The methods and apparatuses provided by the embodiments of the present disclosure have been introduced in detail above. Specific examples are used in the present disclosure to illustrate the principles and implementations of the present disclosure. The description of the above embodiments is only used to help understand the methods and the core idea of the present disclosure. Meanwhile, for those of ordinary skill in the art, there will be changes in the specific implementation and application scope based on the ideas of the present disclosure. In summary, the content of the description should not be understood as a limitation of the present disclosure.

## Claims

1. A method for determining a number of an uplink transmission link, wherein the method is executed by a terminal and comprises:
determining an uplink band that supports uplink transmission switching; and
determining a first number of an uplink transmission link supported by the uplink band.

2. The method according to claim 1, wherein determining the number of the uplink transmission link indicated by the uplink band comprises:
determining the first number according to a second number of the uplink band indicated by a network device.

3. The method according to claim 2, wherein determining the first number according to the second number of the uplink band indicated by the network device comprises:
in response to the second number being within a first range, determining that the first number is 1;
in response to the second number being within a second range, determining that the first number is greater than 1.

4. The method according to claim 1, wherein determining the number of the uplink transmission link indicated by the uplink band comprises:
determining the first number according to a protocol agreement.

5. The method according to claim 4, wherein the protocol agreement is that in an uplink band list configured by a network device and/or a list of bands supported by the terminal, the first number of the uplink transmission link supported by a preset sorted uplink band is greater than 1, and the first number of the uplink transmission link supported by other uplink band is 1.

6. The method according to claim 1, wherein determining the first number of the uplink transmission link supported by the uplink band comprises:
determining an uplink band that supports at least two uplink transmission links according to indication information sent by a network device.

7. The method according to any one of claims 1 to 6, further comprising:
sending capability information to a network device, wherein the capability information is used to indicate an uplink band supported by the terminal that supports at least two uplink transmission links.

8. A method for determining a number of an uplink transmission link, wherein the method is executed by a network device and comprises:
determining an uplink band supported by the terminal for uplink transmission switching; and
determining a first number of an uplink transmission link supported by the uplink band.

9. The method according to claim 8, wherein determining the number of the uplink transmission link indicated by the uplink band comprises:
determining the first number according to a second number of the uplink band configured for the terminal.

10. The method according to claim 9, wherein determining the first number according to the second number of the uplink band configured for the terminal comprises:
in response to the second number being within a first range, determining that the first number is 1;
in response to the second number being within a second range, determining that the first number is greater than 1.

11. The method according to claim 8, wherein determining the number of the uplink transmission link indicated by the uplink band comprises:
determining the first number according to a protocol agreement.

12. The method according to claim 11, wherein the protocol agreement is that in an uplink band list configured for the terminal and/or a list of bands supported by the terminal, the first number of the uplink transmission link supported by a preset sorted uplink band is greater than 1, and the first number of the uplink transmission link supported by other uplink band is 1.

13. The method according to claim 8, further comprising:
sending indication information to the terminal, wherein the indication information is used to indicate an uplink band that supports at least two uplink transmission links.

14. The method according to any one of claims 8 to 13, further comprising:
receiving capability information sent by the terminal;
determining an uplink band supported by the terminal that supports at least two uplink transmission links according to the capability information.

15. A system for determining a number of an uplink transmission link, comprising a terminal and a network device, wherein the terminal is configured to implement the method for determining a number of an uplink transmission link according to any one of claims 1 to 7, and the network device is configured to implement the method for determining a number of an uplink transmission link according to any one of claims 8 to 14.

16. An apparatus for determining a number of an uplink transmission link, comprising:
a processing module, configured to determine an uplink band that supports uplink transmission switching; and determine a first number of an uplink transmission link supported by the uplink band.

17. An apparatus for determining a number of an uplink transmission link, comprising:
a processing module, configured to determine an uplink band supported by a terminal for uplink transmission switching; and determine a first number of an uplink transmission link supported by the uplink band.

18. A communication apparatus, comprising:
a processor; and
a memory configured to store a computer program;
wherein when the computer program is executed by the processor, the method for determining a number of an uplink transmission link according to any one of claims 1 to 7 is implemented.

19. A communication apparatus, comprising:
a processor; and
a memory configured to store a computer program;
wherein when the computer program is executed by the processor, the method for determining a number of an uplink transmission link according to any one of claims 8 to 14 is implemented.

20. A computer-readable storage medium for storing a computer program, wherein when the computer program is executed by a processor, the method for determining a number of an uplink transmission link according to any one of claims 1 to 7 is implemented.

21. A computer-readable storage medium for storing a computer program, wherein when the computer program is executed by a processor, the method for determining a number of an uplink transmission link according to any one of claims 8 to 14 is implemented.
